# FASCICULE DE BREVET EUROPEEN

(11) **EP 1 769 570 B1**
(45) Date de publication et mention de la délivrance du brevet: **03.07.2013**
(21) Numéro de dépôt: 05739552.7
(22) Date de dépôt: 14.03.2005
(51) Int. Cl.: H02K 7/06, H02H 3/44, H02H 7/085, H02K 7/14, H02H 3/08

(54) **ACTIONNEUR PORTATIF LINEAIRE ET PROCEDE DE LIMITATION DE L'EFFORT MAXIMAL D'UN MOTEUR D'UN TEL ACTIONNEUR**
TRAGBARER LINEAR-AKTOR UND VERFAHREN ZUM BEGRENZEN DES MAXIMALEN DREHMOMENTS EINES MOTORS DES AKTORS
LINEAR PORTABLE ACTUATOR AND METHOD FOR LIMITING THE MAXIMUM TORQUE OF A MOTOR OF SAID ACTUATOR

(30) Priorité: 20.07.2004 FR 0408046
(43) Date de publication de la demande: 04.04.2007
(73) Titulaire: Virax, 51200 Epernay (FR)
(72) Inventeur: BERNIER, Frédéric, F-51000 CHALONS EN CHAMPAGNE (FR); AUDINET, Jean-Pierre, F-51160 SAINT IMOGES (FR); FAUCHER, Christophe, F-51100 REIMS (FR)
(74) Mandataire: Habasque, Etienne J. Jean-François
(86) Numéro de dépôt international: PCT/FR2005/000608
(87) Numéro de publication internationale: WO 2006/018487

(56) Documents cités:
- EP-A- 0 119 142
- DE-A- 3 642 136
- US-A- 4 249 117
- US-A1- 2002 074 866
- US-B1- 6 381 109

## Description

La présente invention concerne un actionneur portatif linéaire, un procédé de commande d'un moteur électrique d'un tel actionneur pour limiter l'effort maximal généré par celui-ci et l'utilisation de celui-ci dans un extracteur de pièces mécaniques ou dans un outil pour le travail du tube. Elle concerne également un outil portatif électromécanique de travail de tubes comportant un tel actionneur.

Il est connu des actionneurs capables d'exercer des efforts sur la base d'un moteur électrique à courant continu, voir par exemple le document US 2002/0074866.

Ces actionneurs sont reliés à des outils spécialisés.

Un exemple de tels outils est l'extracteur de pièces mécaniques, notamment pour roulements à billes. Un autre exemple concerne les outils de travail du tube, notamment pour l'expansion de celui-ci.

Cependant, de tels actionneurs sont souvent limités dans l'effort maximal qu'ils sont capables de produire.

En effet, ces actionneurs se trouvent confrontés à deux types de situation de travail.

Dans le premier type de situation, l'outil est en fonctionnement normal. Le matériau sur lequel est appliqué cet outil présente donc une résistance qui fait que l'effort à fournir par le moteur est progressif jusqu'à une certaine valeur maximale de travail qui correspond à l'effort utile maximum sur course en charge de l'actionneur.

Dans le second type de situation, l'outil est mis en fonctionnement à vide. On entend par fonctionnement à vide, une situation dans laquelle un outil est connecté à l'actionneur mais cet outil n'est appliqué sur aucun matériau ou pièce. Aucun matériau n'étant présent pour assurer une résistance au mouvement de l'outil, l'effort exercé par l'actionneur est quasi nul jusqu'au moment où l'outil arrive en bout de course (par exemple, parce que les secteurs d'expansion du tube sont en fin de course). L'outil étant alors bloqué, il génère un effort instantané extrêmement important sur l'actionneur.

La demanderesse a ainsi constaté que l'effort produit dans la seconde situation pouvait être supérieure de 50% à l'effort utile maximal.

Ceci a pour inconvénient d'obliger à dimensionner mécaniquement l'actionneur pour l'effort maximal à vide et non pour l'effort maximal utile ce qui, outre l'augmentation des coûts, augmente également le poids et la dimension de l'actionneur et donc le rend moins portatif.

De plus, cela diminue la fiabilité de l'actionneur en détériorant le moteur et la mécanique par croissance brusque de l'intensité et de l'effort.

Le but de l'invention est de remédier à ces inconvénients.

L'objet de l'invention est un actionneur portatif linéaire selon les caractéristiques de la revendication 1.

Un autre objet de l'invention est un procédé de commande d'un moteur électrique d'un actionneur portatif linéaire pour limiter l'effort maximal généré par celui-ci selon les caractéristiques de la revendication 8.

Un autre objet de l'invention est un outil portatif électromécanique de travail du tube selon les caractéristiques de la revendication 13.

Avantageusement, un tel outil est une machine polyvalente pour le travail du tube, portative et électromécanique.

Des modes particuliers de réalisation de l'actionneur portatif linéaire sont décrits dans les revendications 2 à 7.

Des modes particuliers de réalisation du procédé de commande sont décrits dans les revendications 9 à 11.

Des modes particuliers de réalisation de l'outil portatif sont décrits dans les revendications 14 à 20.

L'invention à pour objet également l'utilisation d'un tel actionneur dans un extracteur de pièces mécaniques, notamment pour roulement, ou dans un outil pour le travail du tube, notamment l'expansion de celui-ci.

L'invention sera mieux comprise à la lumière de la description qui va suivre, donnée uniquement à titre d'exemple, et faisant référence aux dessins annexés dans lesquels :
- la figure 1 est le schéma d'un actionneur ;
- la figure 2 est le schéma synoptique du module électronique de l'actionneur de la figure 1 ;
- la figure 3 est la courbe d'effort en fonction du temps d'un actionneur de l'art antérieur ;
- la figure 4 est la courbe d'effort de l'actionneur de la figure 1 ;
- la figure 5 est l'ordinogramme de commande du module électronique de l'actionneur de la figure 1 ;
- la figure 6 est une vue schématique éclatée de côté d'un outil portatif selon l'invention ;
- la figure 7 est une vue en coupe des moyens de fixation d'une tête de travail ;
- la figure 8 est une vue en coupe des moyens de fixation d'une tête de travail selon la ligne de coupe II-II de la figure 7 ;
- la figure 9 est une vue en perspective des moyens de fixation d'une tête de travail ;
- la figure 10 est une vue en perspective des capteurs de fin de course ;
- la figure 11 est une vue en coupe axiale d'une tête de travail pour l'expansion radiale d'un tube ;
- la figure 12 est une vue en coupe axiale d'une tête de travail pour le sertissage radial d'un tube ;
- la figure 13 est une vue en coupe longitudinale d'une tête de travail pour le sertissage axial en ligne; et
- la figure 14 est une vue en coupe longitudinale d'une autre tête de travail pour le sertissage axial orthogonal.

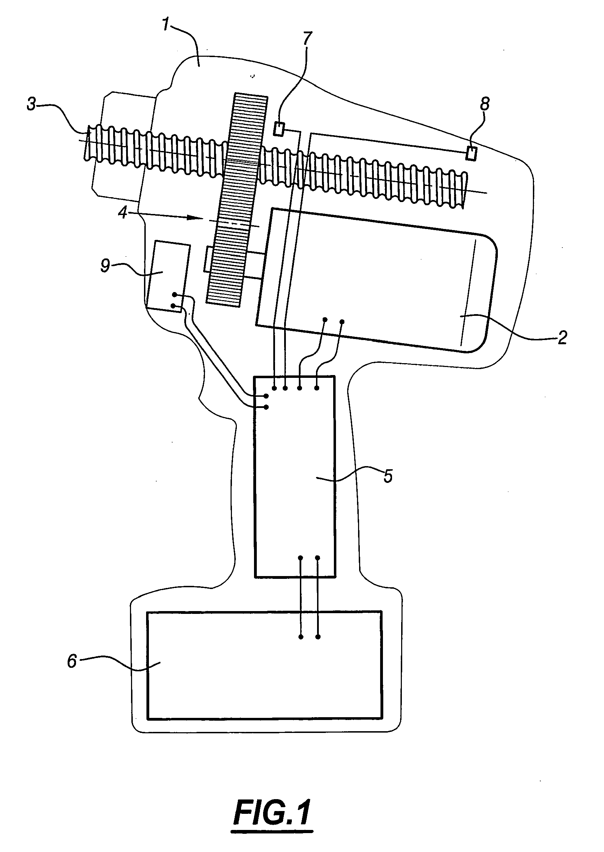

Un actionneur portatif linéaire 1, figure 1, comporte un moteur électrique 2 entraînant en rotation une vis 3 par l'intermédiaire d'un réducteur 4, de structure classique, par exemple de type épicycloïdal. La vis 3 est de préférence une vis à billes qui, comme il est bien connu, permet de transformer le mouvement de rotation du moteur 2 en un mouvement de translation de la vis le long de l'axe de celle-ci. Comme l'actionneur portatif linéaire 1 doit être capable d'un effort important, la vis à billes, en minimisant les frottements mécaniques, est particulièrement bien adaptée.

Le moteur électrique 2 est commandé par un module électronique 5 qui contrôle en particulier l'alimentation électrique du moteur fournie par une batterie 6.

Des capteurs 7, 8 de fin de course sont également connectés au module électronique 5 afin de contrôler l'amplitude de déplacement de la vis 3. Ces capteurs 7, 8 sont, par exemple, des capteurs à effet Hall.

De façon classique, l'actionneur possède également un interrupteur manuel 9, sous forme d'une gâchette, pour permettre à l'utilisateur de contrôler les mouvements de l'actionneur. Cet interrupteur manuel 9 est également connecté au module électronique 5.

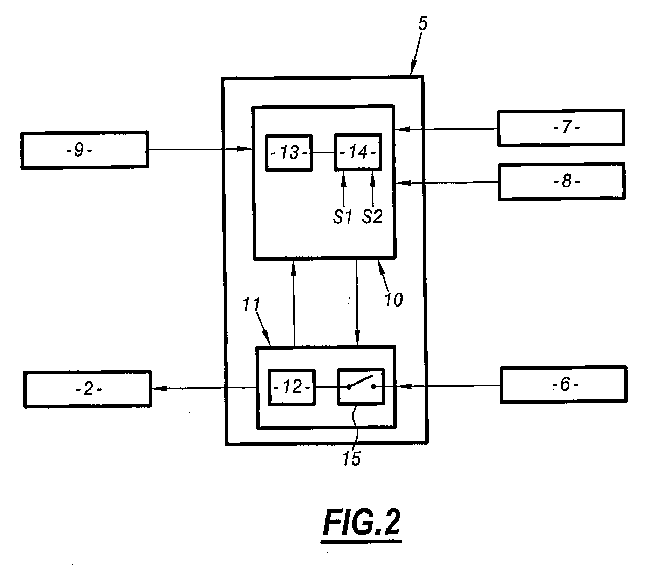

Le module électronique 5, figure 2, comporte classiquement un module de commande 10 comprenant un microcontrôleur connecté à un module de puissance 11 qui assure la gestion de l'alimentation électrique du moteur 2 et qui est donc interposé entre la batterie 6 et le moteur 2.

L'interrupteur manuel 9 et les capteurs 7, 8 de fin de course sont connectés au module de commande 10.

Le module de puissance 11 comprend des moyens 12 d'acquisition de l'intensité instantanée du courant d'alimentation du moteur 2. Cette acquisition est faite de façon classique par exemple par utilisation d'un convertisseur intensité-tension connecté à un convertisseur analogique-numérique ou par l'utilisation d'un mosfet.

Les moyens 12 d'acquisition fournissent donc au module de commande 10 une valeur numérique représentative de l'intensité instantanée du courant d'alimentation du moteur 2.

Le module de commande 10 comporte également des moyens 13 de calcul de la dérivée par rapport au temps de l'intensité du courant d'alimentation.

Il comporte également des moyens 14 de comparaison de cette dérivée à une première valeur prédéterminée S1 et de l'intensité du courant d'alimentation à une seconde valeur prédéterminée S2, pour actionner un interrupteur 15 de coupure de l'alimentation du moteur 2 si cette dérivée est supérieure à cette première valeur prédéterminée S1 ou si l'intensité est supérieure à cette seconde valeur prédéterminée S2.

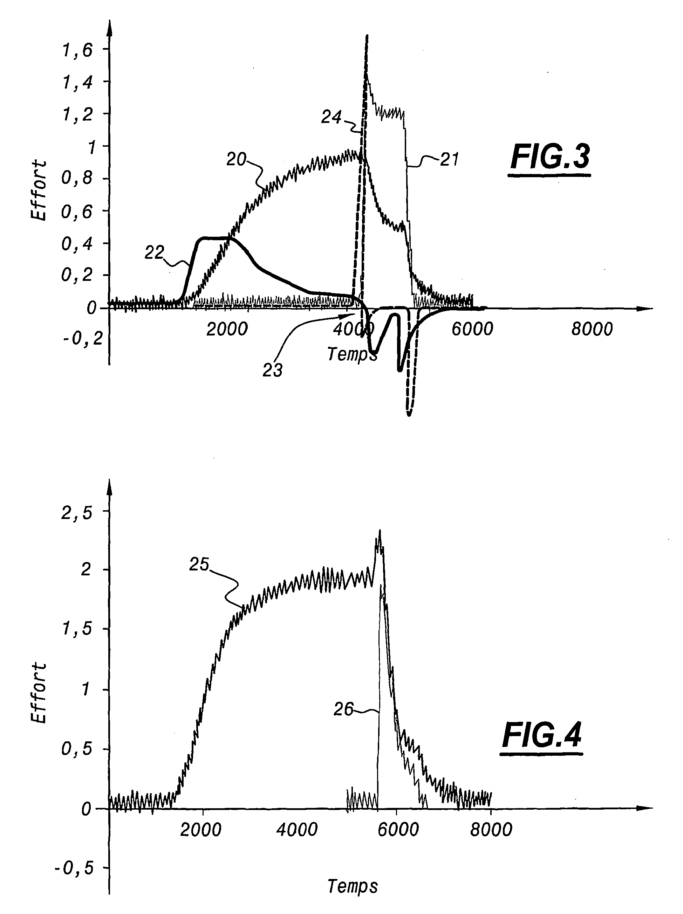

Le fonctionnement de l'actionneur va être explicité en relation avec la figure 3.

En effet, une étude de la figure 3 qui représente l'effort en fonction du temps lorsque l'actionneur est en charge, courbe 20, et lorsque l'actionneur fonctionne à vide, courbe 21, montre que, dans le cas de l'effort en charge, la courbe croît régulièrement avant d'atteindre une quasi-asymptote. La pente, donc la dérivée, courbe 22, n'est donc jamais très élevée.

A l'inverse, la courbe 21 montre au moment du blocage, en 23, une croissance quasi-verticale et donc une pente très élevée, courbe 24.

En se rappelant que dans un moteur électrique à courant continu, il existe une relation linéaire entre l'intensité du courant d'alimentation de ce 5 moteur et l'effort fourni par celui-ci, on conçoit donc que la détection d'une dérivée de cette intensité supérieure à une certaine valeur prédéterminée est une indication de la mise en blocage de l'actionneur et nécessite donc l'arrêt du moteur par interruption de son alimentation.

Là figure 4 montre les courbes d'effort dans les deux situations précédentes, en charge, courbe 25, et avec blocage après course à vide, courbe 26, pour un actionneur comportant un module électronique tel que décrit précédemment. On constate que la détection d'une dérivée trop grande empêche bien l'actionneur de se trouver dans une situation d'effort supérieur à l'effort maximal utile.

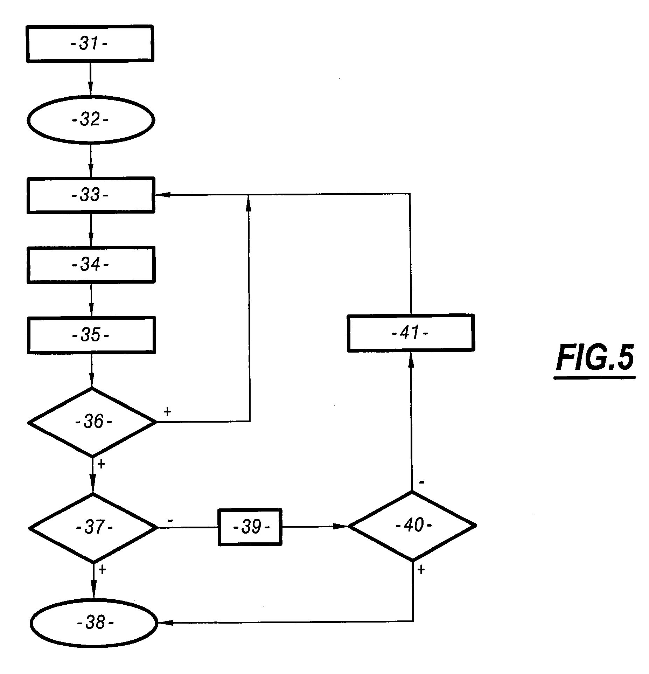

5 Le procédé de commande du moteur électrique 2 par le module électronique 5 va maintenant être détaillé en relation avec la figure 5.

Après une phase d'initialisation 31, le microcontrôleur attend un signal de démarrage du moteur en 32 provenant de la gâchette 9. Lorsque le microcontrôleur reçoit en 32 l'ordre de démarrage, il commande l'alimentation du moteur. Il déclenche, en parallèle, un délai d'inhibition, non représenté, pendant lequel les acquisitions ne seront pas prises en compte afin de s'affranchir des phénomènes transitoires du démarrage, et une temporisation d'acquisition en 33 des valeurs représentatives de l'intensité du courant d'alimentation du moteur électrique 2. Cette temporisation permet d'acquérir une valeur à intervalle régulier.

Puis, en 34, le microcontrôleur acquiert une valeur représentative de l'intensité du courant sur lequel il effectue un traitement du signal en 35 afin de discriminer, en particulier, le signal du bruit.

Si, en 36, le délai d'inhibition n'est pas terminé alors une nouvelle temporisation d'acquisition est enclenchée en 33. Sinon, le microcontrôleur compare en 37 la valeur du courant avec un seuil maximal prédéterminé S2. Cette seconde valeur prédéterminée S2 permet de vérifier que l'effort ne dépasse pas une valeur maximale.

Si la valeur de l'intensité est supérieure à ce seuil maximal, un ordre de coupure de l'alimentation est donné en 38. Sinon, on calcule la dérivée de l'intensité du courant par rapport au temps en 39 et on le compare en 40 à la valeur maximale prédéterminée S1. Si cette dérivée est supérieure à la valeur maximale S1 alors l'alimentation est coupée en 38, sinon on enregistre la valeur de l'intensité en 41 avant d'enclencher la temporisation de l'acquisition suivante de la valeur d'intensité en 33.

Il est remarquable de noter que si les temporisations d'acquisition effectuées en 33 sont constantes, c'est-à-dire que les acquisitions ont lieu à intervalles réguliers, alors le calcul de la dérivée peut être approximé par le calcul de la différence entre deux valeurs acquises selon une période régulière et la pente maximale est alors remplacée par une différence maximale. Ainsi, le module électronique 5 comportant des moyens d'échantillonnage à intervalle régulier, les moyens de calcul stockent ces valeurs d'échantillonnages pour une fenêtre de temps glissante de durée prédéterminée puis effectuent la différence entre les valeurs d'intensité pour l'échantillon le plus récent et l'échantillon le plus ancien et les moyens de comparaison comparent cette valeur avec la première valeur prédéterminée.

Il est ainsi possible de conserver les n dernières valeurs successives de l'intensité, n étant égal à 10, par exemple. Le stockage de ces valeurs peut être effectué dans une mémoire de type FIFO (First In - First Out ; Premier Entré - Premier Sorti). La différence est ainsi faite entre la valeur courante de l'intensité et celle de l'intensité acquise n-1 intervalles plus tôt.

Le choix de la valeur n est faite par compromis entre la précision maximale du microcontrôleur de calcul et la vitesse de détection souhaitée.

Il comporte également des moyens de temporisation tels que les moyens d'interruption ne sont activables qu'après un délai prédéterminé suivant le démarrage de l'actionneur.

Les capteurs 7, 8 de fin de course de la vis sont connectés au module électronique 5 de telle sorte que l'interrupteur 15 de l'alimentation est activé quand ces capteurs détectent que la vis est en fin de course.

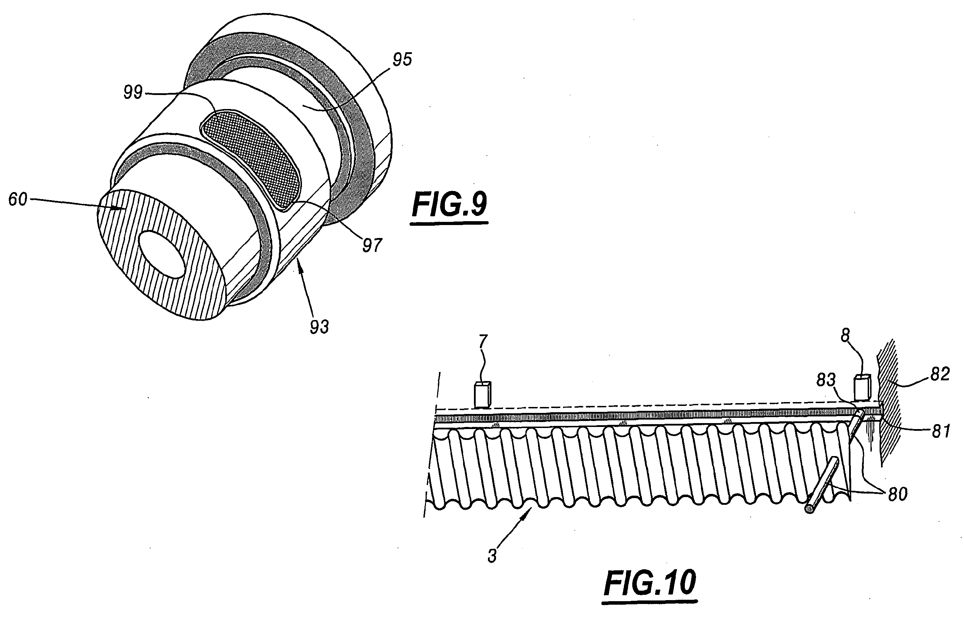

Le fonctionnement des détecteurs 7, 8 de fin de course va maintenant être décrit en relation avec la figure 10.

Le principe de fonctionnement d'une vis à billes implique que celle-ci soit bloquée en rotation afin que le mouvement en rotation de l'écrou contenant les billes soit transformé par la vis en un mouvement de translation.

La vis à billes 3 comporte donc une goupille transversale 80 d'anti-rotation dont chaque extrémité coulisse dans une rainure 81 d'une pièce fixe 82 de l'actionneur portatif linéaire 1.

L'axe 80 anti-rotation comporte à l'une de ses extrémités un aimant 83.

De plus, la pièce fixe 82 de guidage comporte, placés sur la rainure de guidage, deux capteurs à effet Hall 7, 8 qui servent de détecteurs de fin de course. Ainsi, la distance séparant les deux capteurs 7 et 8 définit la course maximale de l'appareil.

En effet, le passage de l'aimant 83 à proximité du capteur à effet Hall modifie le champ magnétique de celui-ci, ce qui déclenche une modification du courant du capteur. Le positionnement adéquat de ces capteurs permet ainsi d'indiquer à l'électronique de commande 5 que la vis à billes 3 arrive en fin de course.

Dans une variante de réalisation, la pièce de guidage 82 comporte une carte électronique ayant plusieurs emplacements adaptés pour recevoir les capteurs à effet Hall.

Ainsi, une même carte électronique peut être utilisée pour un ou plusieurs modèles d'actionneur portatif linéaire ayant, en particulier, des longueurs de déplacement de la vis à billes différentes. En cours de fabrication, les capteurs sont positionnés aux emplacements adéquats pour la vis à billes considérée.

Grâce à cette limitation de l'effort de l'actionneur, il est ainsi possible de dimensionner le moteur et les pièces mécaniques en fonction de l'effort maximal utile uniquement. On obtient ainsi un actionneur moins cher et plus léger, donc plus aisément portable.

De plus, le moteur ne subissant plus un effort important brusque, sa fiabilité est augmentée.

Cela permet d'utiliser l'actionneur avec des outils nécessitant un effort important. Un exemple de tels outils est l'extracteur pour pièces mécaniques, notamment pour roulement. Les outils pour le travail du tube, en particulier son expansion, sont également des outils nécessitant des efforts importants et qui peuvent donc être utilisés avec cet actionneur.

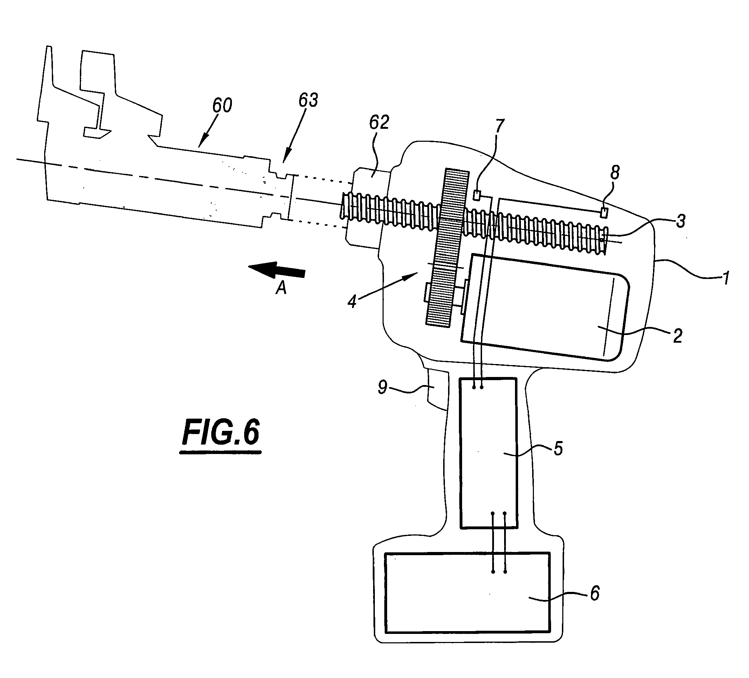

Un tel outil électro-mécanique de travail de tubes va maintenant être décrit en relation avec la figure 6.

L'outil portatif de travail de tubes comporte, figure 6, un actionneur portatif linéaire 1 comme décrit précédemment et au moins deux têtes de travail, dont une tête 60 est représentée schématiquement.

Dans la suite de la description, les expressions "vers l'avant", "vers l'extérieur", "vers la gauche" sont des synonymes désignant un mouvement provoqué par la vis à billes selon la flèche A de la figure 6, c'est-à-dire de l'intérieur vers l'extérieur de l'actionneur portatif linéaire 1.

De même, l'orientation des différents dessins étant identique, l"'avant" correspond à la partie gauche des objets et donc, pour l'actionneur portatif linéaire 1, au côté sur lequel s'accroche la tête 60.

L'actionneur portatif linéaire 1 comporte également des moyens 62 de fixation de tête de travail sous forme d'un embout cylindrique creux ayant le même axe que la vis à billes 3.

Des têtes de travail 60 spécialisées comportent chacune des moyens 63 de fixation complémentaires des moyens 62 de fixation de l'actionneur portatif linéaire 1 afin de fixer solidairement ces têtes 60 à l'actionneur portatif linéaire 1 de façon séparable.

Les caractéristiques principales des moyens 62, 63 de fixation sont d'assurer une fixation rigide de la tête 60 sur l'actionneur portatif linéaire 1, de supporter des contraintes importantes en particulier dans l'axe longitudinal de la vis à billes 3, et de permettre une manipulation aisée et rapide pour le changement des têtes de travail.

Les moyens 62, 63 de fixation peuvent être réalisés de nombreuses façons comme, par exemple, par l'utilisation d'un assemblage à baïonnette ou par un mécanisme à encliquetage axial, muni de plusieurs billes de verrouillage mobiles radialement.

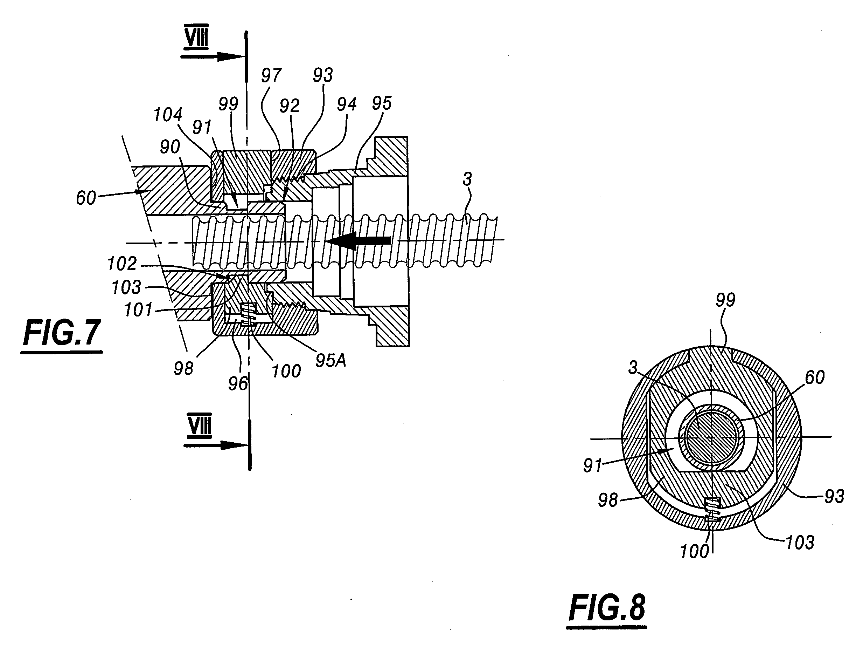

Un mode particulier de réalisation de ces moyens 62, 63 de fixation va maintenant être décrit en relation avec les figures 7, 8 et 9.

Les moyens 63 de fixation de la tête de travail sont composés d'un cylindre creux 90 comportant sur son pourtour une gorge annulaire 91. Le diamètre intérieur du cylindre creux 90 est adapté pour assurer le passage sans contrainte de la vis à billes 3. L'extrémité droite ou proximale du cylindre 90 comporte un chanfrein 92.

Les moyens 62 de fixation de l'actionneur portatif linéaire 1 comportent une bague annulaire 93 se vissant en 94 sur un embout d'extrémité cylindrique creux 95 de l'actionneur portatif linéaire 1. Le diamètre intérieur de cette extrémité cylindrique 95 est adapté pour permettre le coulissement interne du cylindre 90 des moyens 63 de fixation de la tête de travail. Les axes de la vis à billes 3, de l'embout cylindrique 95 et de la bague annulaire 93 se confondent. Ainsi la vis à billes 3 est placée dans l'extrémité cylindrique creuse 95 avec un large jeu.

La bague annulaire 93 comporte, à l'avant par rapport à l'embout 95, une gorge intérieure 96 reliée sur une partie de son pourtour à la surface extérieure de la bague annulaire par une lumière 97.

Un anneau 98 normalement excentré est logé dans la gorge intérieure 96. Il comporte un élément 99 faisant saillie radialement vers l'extérieur, adapté pour coulisser dans la lumière 97. Du côté opposé à cette lumière 97, un ressort 100 est placé entre le fond de la gorge 96 et l'anneau 98 de façon à repousser celui-ci en direction de la lumière 97, vers une position limite excentrée en butée contre un gradin d'extrémité 95A de l'embout 95.

L'anneau 98 comporte également sur sa surface intérieure une collerette ou une partie de collerette 101 comportant un chanfrein 102 sur son côté gauche.

Le fonctionnement de ces moyens de fixation est le suivant :

La tête de travail 60 est positionnée par l'opérateur en face des moyens de fixation 62 de l'actionneur portatif linéaire 1 de façon à ce que l'extrémité du cylindre 90 s'emboîte dans la bague annulaire 93 et la vis à billes 3 dans l'extrémité du cylindre 90. En poussant la tête de travail 60 vers l'actionneur portatif linéaire 1, l'extrémité chanfreinée 92 prend appui sur le chanfrein 102 de l'anneau 98 et repousse radialement celui-ci jusque dans l'axe général (vers le bas sur la figure 7), permettant ainsi le passage du cylindre 90, jusqu'à ce que la gorge annulaire 91 se trouve en face de la collerette 101. Sous l'effet du ressort 100, la collerette 101 se loge dans la gorge annulaire 91, verrouillant ainsi la tête de travail 60 en position. Un épaulement radial 104 de la tête 60 adjacent au cylindre 90 est alors fermement plaqué contre la face avant radiale 103 de la bague 93.

Pour changer de tête, l'opérateur repousse l'anneau 98 en appuyant sur sa partie 99 faisant saillie, dégageant ainsi la collerette 101 de la gorge annulaire 91 et permettant la libération de la tête de travail 60.

Ainsi, l'anneau 98 se comporte comme un loquet coulissant qui vient s'insérer dans la gorge annulaire 95 pour fixer la tête de travail.

Ce mécanisme permet avantageusement d'offrir à la tête de travail 60 un degré de liberté en rotation autour de l'actionneur linéaire.

Il est ainsi possible d'adapter sur l'actionneur portatif linéaire 1 de nombreuses têtes de travail de tubes comme des têtes pour augmenter le diamètre d'un tube, pour sertir radialement ou axialement un tube, ou pour tronçonner un tube, sans que cette liste soit limitative.

A titre d'exemple, quelques têtes de travail vont maintenant être décrites.

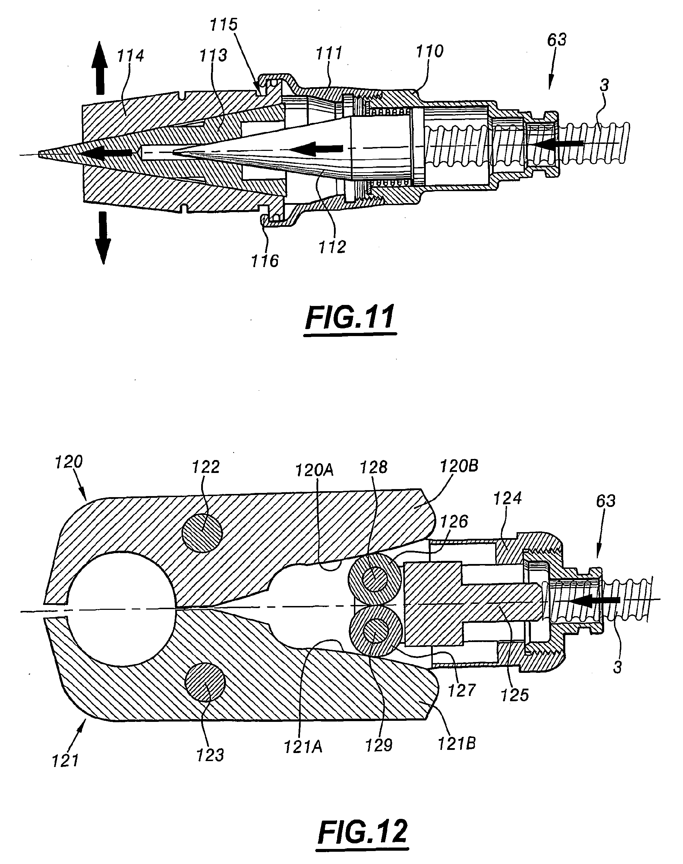

Une première tête de travail, figure 11, sert à la dilatation localisée d'un tube. Cette tête d'expansion radiale, utilisant un principe bien connu, ne sera décrite que brièvement.

Elle comporte des moyens 63 de fixation tels que décrits ci-dessus, faisant partie d'un corps cylindrique 110. Ce corps est prolongé à l'avant par une bague vissée 111.

Un poussoir 112 ayant une extrémité avant en forme de cône, coulisse à l'intérieur de ce corps et prend appui par l'intermédiaire d'une pièce conique 113 sur la face interne de secteurs 114, par exemple au nombre de six, formant une couronne tronconique. Ces secteurs 114 ont une capacité de pivotement relativement limitée autour d'une gorge annulaire 115 prévue à leur extrémité arrière, dans laquelle vient en prise une collerette radiale intérieure 116 formée à l'extrémité avant de la bague 111.

La couronne de secteurs 114 étant positionnée en appui sur la périphérie intérieure d'un tube, comme indiqué par les flèches, la vis à billes 3 pousse vers l'avant la pièce conique 112, qui, elle-même, pousse la pièce 113, ce qui a pour effet d'écarter radialement les éléments 114 de leur position de repos et donc d'augmenter localement le diamètre du tube.

Une deuxième tête de travail, figure 12, est une tête de sertissage radial. Fondamentalement similaire à une sertisseuse manuelle, elle comporte deux mâchoires 120 et 121 articulées autour de deux axes parallèles 122, 123 portés par un corps 124, ce corps comportant les moyens 63 de fixation à son extrémité arrière. Un poussoir 125 monté coulissant à l'intérieur du corps porte à l'avant deux galets 126, 127 montés sur deux axes 128, 129 de rotation parallèles aux axes 122, 123. Les deux galets viennent en appui sur la surface intérieure 120A, 121A, formant came du bras arrière 120B, 121B des mâchoires.

Comme indiqué par les flèches, en poussant vers l'avant le poussoir coulissant 125, la vis à billes 3 provoque un écartement des bras 120B, 121 B des mâchoires par l'intermédiaire des galets 126, 127, permettant ainsi le serrage des mâchoires et donc le sertissage radial d'un tube disposé entre elles.

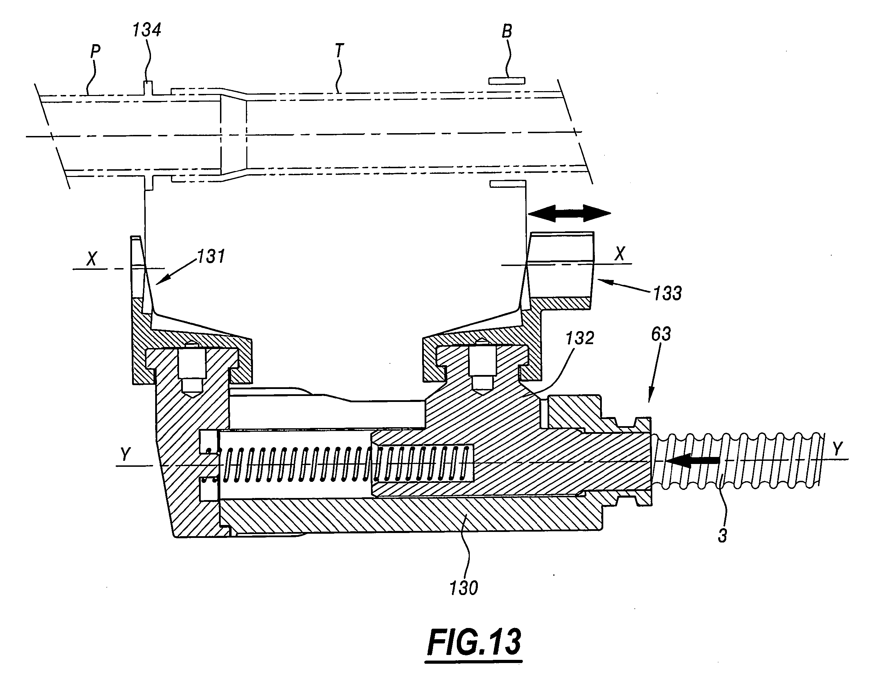

Une troisième tête de travail, figure 13, est une tête de sertissage axial en ligne. Le sertissage axial, aussi appelé « pousse-bague », consiste à positionner une bague B de telle sorte que celle-ci crée une liaison fixe entre le tube T et une pièce de liaison P. Après expansion de l'extrémité du tube, la pièce P est enfilée dans l'extrémité évasée du tube et la bague B coulisse librement sur celui-ci.

La tête comprend deux pièces principales : un corps 130 qui porte une mâchoire fixe 131 à son extrémité avant et les moyens 63 de fixation à son autre extrémité, et une pièce mobile 132, munie d'une seconde mâchoire 133, adaptée pour coulisser à l'intérieur du corps 130. Chaque mâchoire forme un berceau semi-circulaire de réception de la pièce P et du tube, les deux berceaux ayant un axe commun X-X parallèle à la direction Y-Y de coulissement de la pièce 132.

La vis à billes pousse la seconde pièce 132, permettant ainsi aux deux mâchoires 131, 133 de se rapprocher, à l'extrémité du tube de venir en butée contre une collerette extérieure 134 de la pièce P, et à la bague B de venir à force se superposer à la pièce P en resserrant ainsi l'extrémité du tube sur le pièce P afin d'assurer l'étanchéité.

De fonctionnement très simple, cet outil a l'inconvénient de nécessiter son positionnement, et en particulier celui de l'actionneur portatif linéaire 1, dans l'axe du tube. Cela peut être un inconvénient si cette opération a lieu dans un espace confiné ayant une dimension particulièrement restreinte dans l'axe du tube à travailler.

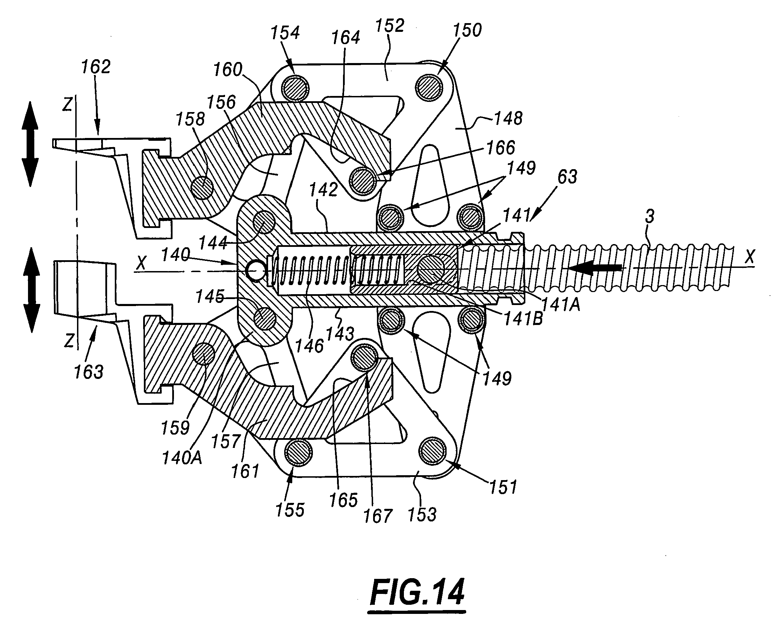

Afin de résoudre ce problème, la tête de la figure 14 permet le sertissage axial d'un tube en tenant l'outil perpendiculairement à l'axe de celui-ci.

Cette tête, figure 14, fonctionne dans un plan général correspondant à celui de la figure.

Elle comporte un corps fixe 140 ayant globalement une forme de T dont le pied comporte les moyens de fixation 63.

Le corps 140 est évidé de façon à permettre le coulissement d'une pièce 141 le long de celui-ci, selon l'axe de déplacement de la vis à billes 3. Deux côtés opposés du corps définissent deux surfaces planes et parallèles 142, 143.

La partie avant 140A, pleine, du corps fixe 140, comporte à ses extrémités deux axes de rotation 144, 145 perpendiculaires au plan du mouvement.

A l'intérieur du corps, un ressort de rappel 146 relie le corps à la pièce coulissante 141, qu'il sollicite vers l'arrière.

Une pièce symétrique 148 par rapport à l'axe X-X de déplacement de la vis à billes 3 ayant la forme sensiblement d'un losange a sa petite diagonale parallèle à l'axe de déplacement de la pièce 141. Cette pièce est solidaire de la pièce mobile 141, par l'intermédiaire d'une tige 141A guidée dans deux lumières opposées 141 B du corps 140. La pièce 148 comporte quatre galets 149 de guidage qui roulent le long des surfaces 142, 143 du corps.

Aux deux extrémités correspondant à la grande diagonale de la pièce en losange 148 sont articulées, autour de deux axes de rotation 150, 151, deux pièces triangulaires 152, 153 symétriques l'une de l'autre par rapport à l'axe X-X.

Ces deux pièces 152, 153 ont sensiblement la forme d'un triangle isocèle dont la base est sensiblement parallèle au corps de la pièce fixe 140 lorsque la tête est en position ouverte et dont le sommet se trouve entre la base du triangle et le corps fixe 140.

Les premières extrémités de ces bases étant articulées sur les axes 150, 151 du losange, les secondes extrémités de celles-ci comportent un axe 154, 155 de rotation d'un autre couple de pièces triangulaires 156, 157 symétriques l'une de l'autre.

Les deux pièces 156, 157 ont également sensiblement la forme de triangles isocèles.

Les sommets de ceux-ci sont articulés autour des axes 154, 155. Les premières extrémités de leurs bases sont articulées autour des axes 144, 145 du corps fixe 140, et les secondes extrémités de leurs bases comportent deux axes de rotation 158, 159 sur lesquelles s'articulent deux bras 160, 161. Ces bras portent à l'avant des mâchoires 162, 163 destinées à recevoir le tube et la pièce à emboîter dans ce tube.

Ces mâchoires 162, 163 sont identiques aux mâchoires 131, 133 de la figure 13, leurs berceaux d'axe Z-Z étant perpendiculaire à l'axe X-X du corps 140. Elles sont montées différemment afin de permettre un sertissage près du mur

Les bras de guidage 160, 161 comportent eux-mêmes à leur extrémité droite deux surfaces de came intérieures 164, 165 sur lesquelles des plots de guidage 166, 167, positionnés aux sommets du premier couple de triangles 152, 153, viennent glisser. Les surfaces 164, 165 sont inclinées et convergent vers l'arrière.

Le fonctionnement de cette tête de travail est le suivant.

Au repos, la pièce coulissante 141 se trouve à l'arrière de la partie fixe 140 et les mâchoires 162, 163 sont ouvertes, écartées l'une de l'autre (figure 14).

La vis à billes 3, en poussant la pièce coulissante 141, déplace vers l'avant celle-ci, et la pièce en losange 148 dont elle est solidaire, et pousse donc celle-ci vers l'avant du corps fixe 140.

Ce déplacement vers l'avant pousse également le premier couple de pièces triangulaires 152, 153, qui, à leur tour, poussent vers la gauche les extrémités du second couple de pièces triangulaires 156, 157 qui leur sont reliées.

Ces dernières pièces 156, 157 ayant un sommet fixé sur le corps fixe 140, le mouvement de translation se transforme en un mouvement de rotation qui rapproche les axes 158, 159 l'un de l'autre.

Or, il est évident que, pour une bonne efficacité de l'emboîtage, il faut que les deux mâchoires 162, 163 restent parallèles l'une par rapport à l'autre pendant ce mouvement de rotation.

C'est l'objet des bras de guidage 160, 161. La force de résistance exercée par le tube et sa pièce de liaison exerce un couple de rotation dans le sens inverse de la rotation des pièces 156, 157. Ainsi, les bras de guidage 160, 161 sont maintenus en appui sur les plots 166, 167 le long de leurs surfaces 164, 165.

La découpe de ces surfaces 164, 165 est alors spécialement adaptée pour qu'à tout instant au cours du mouvement, les mâchoires 162, 163 restent parallèles entre elles.

Cette tête de travail permet ainsi, avantageusement, un emboîtage en maintenant l'outil perpendiculairement au tube à emboîter, permettant d'opérer alors que le tube est déjà fixé au mur ou situé dans un environnement difficile d'accès.

Cette tête de travail fonctionne de manière préférentielle avec l'actionneur portatif linéaire décrit ci-dessus. Cependant l'homme du métier sait adapter sans difficulté cette tête à d'autres actionneurs capables de générer un mouvement linéaire tels que des actionneurs électro-hydrauliques.

On comprend qu'en variante, d'autres têtes de travail de tubes peuvent être utilisées avec l'actionneur portatif linéaire 1, comme, par exemple, une tête de coupe de tube type guillotine.

L'outil portatif décrit permet ainsi, grâce à la vis à billes, de fournir une force importante par des moyens électro-mécaniques de faible poids tout en utilisant un moteur alimenté sur batterie.

## Revendications

1. Actionneur portatif linéaire comportant un moteur (2) électrique entraînant en rotation une vis (3) par l'intermédiaire d'un réducteur (4), ledit moteur (2) étant commandé par un module (5) électronique comportant des moyens (12) d'acquisition de l'intensité instantanée du courant d'alimentation du moteur, **caractérisé en ce que** le module (5) électronique comporte en outre des moyens (13) de calcul de la dérivée par rapport au temps de l'intensité du courant d'alimentation, connectés à des moyens (14) de comparaison de cette dérivée avec une première valeur prédéterminée (S1), lesdits moyens (14) de comparaison étant aptes à commander des moyens d'interruption (15) du courant d'alimentation si cette dérivée est supérieure à la première valeur prédéterminée (S1), **en ce que** la vis (3) comporte à l'une de ses extrémités un axe d'anti-rotation (80) comportant à son extrémité un aimant (83), et **en ce que** l'outil portatif comporte un ou des capteurs à effet Hall (7, 8) aptes à détecter le passage de l'aimant (83) et positionnés de sorte que le passage de l'aimant (83) indique que la vis (3) est en fin de course.

2. Actionneur portatif linéaire selon la revendication 1, **caractérisé en ce que** les moyens (12) d'acquisition de l'intensité comportent des moyens d'échantillonnage à intervalle régulier de celle-ci connectés à des moyens de stockage de ces échantillons pour une fenêtre de temps glissante d'une durée prédéterminée et les moyens (13) de calcul de la dérivée comportent des moyens de calcul de la différence entre les valeurs de l'intensité pour l'échantillon le plus récent et l'échantillon le plus ancien de la fenêtre et les moyens (14) de comparaison comparent cette différence avec la première valeur prédéterminée (S1).

3. Actionneur portatif linéaire selon la revendication 1 ou 2, **caractérisé en ce que** le module (5) électronique comporte en outre des seconds moyens de comparaison de l'intensité du courant d'alimentation avec une seconde valeur prédéterminée (S2), aptes à commander les moyens (15) d'interruption du courant d'alimentation si cette intensité est supérieure à la seconde valeur prédéterminée (S2).

4. Actionneur portatif linéaire selon l'une quelconque des revendications précédentes, **caractérisé en ce que** le module (5) électronique comporte en outre des moyens de temporisation tels que les moyens d'interruption ne sont activables qu'après un délai prédéterminé suivant le démarrage de l'actionneur.

5. Actionneur portatif linéaire selon l'une quelconque des revendications précédentes, **caractérisé en ce qu'**il comporte en outre des capteurs (7, 8) de fin de course de la vis connectés au module (5) électronique de telle sorte que les moyens (15) d'interruption de l'alimentation sont activés quand lesdits capteurs (7, 8) détectent que la vis (3) est en fin de course.

6. Actionneur portatif linéaire selon l'une quelconque des revendications 1 à 5, **caractérisé en ce que** les capteurs à effet Hall (7, 8) sont positionnés sur une carte électronique (82) comportant plusieurs emplacements de positionnement de ces capteurs adaptés à différentes courses de déplacement de la vis (3).

7. Actionneur portatif linéaire selon l'une quelconque des revendications précédentes, **caractérisé en ce que** la vis (3) est une vis à billes et que le moteur électrique (2) est alimenté par une batterie.

8. Procédé de commande d'un moteur (2) électrique d'un actionneur portatif linéaire entraînant en rotation une vis (3) par l'intermédiaire d'un réducteur (4), ledit moteur (2) étant commandé par un module (5) électronique comportant des moyens (12) d'acquisition de l'intensité instantanée du courant d'alimentation du moteur, la vis (3) comportant à l'une de ses extrémités un axe d'anti-rotation (80) comportant à son extrémité un aimant (83), et l'actionneur portatif comportant un ou des capteurs à effet Hall (7, 8) aptes à détecter le passage de l'aimant (83) et positionnés de sorte que le passage de l'aimant (83) indique que la vis (3) est en fin de course, pour limiter l'effort maximal généré par celui-ci, le procédé étant **caractérisé en ce qu'**il comporte les étapes suivantes :
- acquisition d'une valeur du courant d'alimentation du moteur électrique à intervalle régulier ;
- calcul de la dérivée de la fonction du courant par rapport au temps ; et
- si la dérivée est supérieure à une première valeur prédéterminée (S1), interruption de l'alimentation électrique du moteur.

9. Procédé selon la revendication 8, **caractérisé en ce que** l'acquisition de la valeur du courant ayant lieu à intervalle régulier, le calcul de la dérivée est approximée par le calcul de la différence entre la valeur du courant entre l'acquisition la plus récente et l'acquisition la plus ancienne d'une fenêtre de temps glissante.

10. Procédé selon l'une des revendications 8 ou 9, **caractérisé en ce qu'**il comporte en outre les étapes de comparaison de la valeur du courant d'alimentation avec une seconde valeur prédéterminée (S2), puis d'interruption du courant d'alimentation si cette valeur du courant est supérieure à la seconde valeur prédéterminée (S2).

11. Procédé selon l'une des revendications 8, 9 ou 10, **caractérisé en ce que** les étapes de calcul de la dérivée et de comparaison ne sont activées qu'après un temps prédéterminé après le démarrage du moteur.

12. Utilisation d'un actionneur selon l'une des revendications 1 à 7 dans un extracteur de pièces mécaniques, notamment pour roulement, ou dans un outil pour le travail du tube, notamment l'expansion de celui-ci.

13. Outil portatif électro-mécanique de travail de tubes comportant un actionneur portatif linéaire (1), selon l'une quelconque des revendications 1 à 7 et des premiers moyens (62) de fixation, ledit outil comportant en outre une première tête de travail (60) adaptée pour effectuer sur un tube une première tâche et au moins une seconde tête de travail adaptée pour effectuer sur un tube une seconde tâche différente de la première tâche, chaque tête de travail (60) comportant des seconds moyens (63) de fixation, et les premiers et seconds moyens (62, 63) de fixation étant adaptés pour coopérer ensemble pour fixer chaque tête de travail (60) à l'actionneur portatif linéaire de telle sorte que celui-ci puisse générer un mouvement de translation d'une partie prédéterminée de la tête de travail fixée à l'actionneur portatif linéaire (1).

14. Outil portatif selon la revendication 13, **caractérisé en ce que** les têtes de travail (60) sont adaptées pour réaliser chacune l'une au moins des tâches suivantes :
- expansion radiale d'un tube,
- expansion axiale d'un tube,
- découpe d'un tube,
- sertissage axial en ligne,
- sertissage axial orthogonal,
- sertissage radial d'un tube.

15. Outil portatif selon la revendication 14, **caractérisé en ce que** chaque tête est adaptée pour réaliser une seule des tâches.

16. Outil portatif selon la revendication 14, **caractérisé en ce qu'**une tête de travail est adaptée pour réaliser un sertissage axial d'un tube dans un mouvement orthogonal au mouvement de translation généré par l'actionneur portatif linéaire (1).

17. Outil portatif selon la revendication 16, **caractérisé en ce que** la tête de travail comporte un support fixe (140) en forme de T, comportant à son pied les seconds moyens (63) de fixation et dans son corps un alésage apte à permettre le coulissement de la vis (3) et définissant un plan de déplacement de moyens mobiles (148, 152, 153, 156, 157, 160, 161, 162, 163) aptes à transformer un mouvement de translation généré par la vis (3) le long du corps du support fixe (140) en des mouvements de rotation de deux bras porte-mâchoire (160, 161) autour de deux axes (144, 145) perpendiculaires au plan de déplacement, positionnés aux extrémités de la tête des moyens de support fixe (140), et des moyens (164, 165, 166, 167) pour maintenir les mâchoires (162, 163) parallèles à elles-mêmes au cours des mouvements de ces bras (160, 161).

18. Outil portatif selon la revendication 17, **caractérisé en ce que** les moyens mobiles sont symétriques par rapport à l'axe (X-X) de déplacement de la vis (3) et comportent des premiers éléments (141, 148, 149) mobiles en translation le long du corps du support fixe (140) et solidaires de la vis (3), reliés par des premiers axes de rotation (150, 151) à des deuxièmes éléments (152, 153), ceux-ci étant reliés par des deuxièmes axes de rotation (154, 155) à des troisièmes éléments (156, 157) montés pivotants autour des axes de rotation (144, 145) de la tête du support, et **en ce que** les bras porte-mâchoire (160, 161) sont articulés autour de troisièmes axes de rotation (158, 159) des troisièmes éléments (156, 157), ces bras (160, 161) comportant des rampes de came (164, 165) qui coopèrent avec des contre-cames (166, 167) portées par lesdits deuxièmes éléments (152, 153) pour maintenir les mâchoires (162, 163) parallèles à elles-mêmes au cours des mouvements de ces bras (160, 161).

19. Outil portatif selon l'une quelconque des revendications 13 à 18, **caractérisé en ce que** les premiers moyens (62) de fixation comportent un loquet coulissant (98) selon un axe perpendiculaire au mouvement de translation de la vis (3), ledit loquet étant adapté pour s'insérer dans une gorge annulaire (91) des seconds moyens (63) de fixation de façon à fixer chaque tête de travail (60) à l'actionneur portatif linéaire (1) tout en permettant une rotation libre de la tête de travail (60) autour de la vis (3).

20. Outil portatif selon la revendication 19, **caractérisé en ce que** le loquet coulissant (98) comporte un anneau sollicité vers une position excentrée pour s'insérer dans la gorge annulaire (91).

## Patentansprüche

1. Tragbarer linearer Stellantrieb, der einen elektrischen Motor (2) aufweist, der eine Schraube (3) mittels eines Getriebes (4) dreht, wobei der Motor (2) durch ein mit Mittel (12) zur erfassung der Sofortintensität des Versorgungsstroms des Motors ausgestattetes elektronisches Modul (5) gesteuert wird, **dadurch gekennzeichnet, dass** das elektronische Modul (5) ferner Mittel (13) zur Ermittlung der Ableitung der Intensität des Versorgungsstroms in der Zeit aufweist, die mit Mitteln (14) zum Vergleich dieser Ableitung mit einem ersten vorbestimmten Wert (S1) verbunden sind, wobei die Vergleichsmittel (14) zur Steuerung von Schaltmitteln (15) des Versorgungsstroms geeignet sind, sofern diese Ableitung größer ist als der erste vorbestimmte Wert (S1), dass die Schraube (3) an einem Ende eine Antirotationsachse (80) aufweist, die an ihrem Ende einen Magneten (83) aufweist, und dass das tragbare Werkzeug einen oder mehrere zur Erkennung der Bewegung des Magneten (83) geeignete Hall-Sensoren (7, 8) aufweist, die derart positioniert sind, dass die Bewegung des Magneten (83) andeutet, dass die Bewegung der Schraube (3) beendet ist.

2. Tragbarer linearer Stellantrieb nach Anspruch 1, **dadurch gekennzeichnet, dass** die Erfassungsmittel (12) Mittel zur Erfassung von Stichproben der Intensität in regelmäßigen Abständen aufweist, die mit Mitteln zur Speicherung dieser Stichprobe für ein gleitendes Zeitfenster mit vorbestimmter Dauer verbunden ist, dass die Mittel (13) zur Ermittlung der Ableitung Mittel zur Ermittlung der Differenz zwischen den Intensitswerten der neuesten und ältesten Stichprobe des Zeitfensters aufweisen, und dass die Vergleichsmittel (14) diese Differenz mit dem ersten vorbestimmten Wert (S1) vergleichen.

3. Tragbarer linearer Stellantrieb nach Anspruch 1 oder 2, **dadurch gekennzeichnet, dass** das elektronische Modul (5) ferner zweite Mittel zum Vergleich der Intensität des Versorgungsstroms mit einem zweiten vorbestimmten Wert (S2) aufweist, die zur Steuerung der Versargungsstrom-Schaltmittel (15) geeignet sind, sofern diese Intensität höher ist als der zweite vorbestimmte Wert (S2).

4. Tragbarer linearer Stellantrieb nach einem der vorstehenden Ansprüche, **dadurch gekennzeichnet, dass** das elektronische Modul (5) ferner Verzögerungszeitmittel aufweist, so dass die Zeitschaltmittel erst nach Ablauf einer vorbestimmten Zeit nach Starten des Stellantriebs aktivierbar sind.

5. Tragbarer linearer Stellantrieb nach einem der vorstehenden Ansprüche, **dadurch gekennzeichnet, dass** er Endsensor (7, 8) der Schraube aufweist, die mit dem elektronischen Modul (5) derart verbunden sind, dass die Schaltmittel (15) der Stromversorgung aktiviert werden, wenn die Sensor (7, 8) erkennen, dass die Schraube angehalten hat.

6. Tragbarer linearer Stellantrieb nach einem der Ansprüche 1 - 5, **dadurch gekennzeichnet, dass** die Hall-Sensoren (7, 8) auf einer elektronischen Karte (82) positioniert sind, die für diese Sensoren mehrere für verschiedene Bewegungsrichtungen der Schraube (3) geeignete Stellen aufweist.

7. Tragbarer linearer Stellantrieb nach einem der vorstehenden Ansprüche, **dadurch gekennzeichnet, dass** die Schraube (3) eine Kugelgewindespindel ist, und dass der elektrische Motor (2) batteriebetrieben ist.

8. Verfahren zur Steuerung eines elektrischen Motors (2) eines tragbaren linearen Stellantriebs, der mittels eines Getriebes (4) Umdrehungen einer Schraube (3) veranlasst, wobei der Motor (2) durch ein mit Mitteln (12) zur erfassung der Sofortintensität des Versorgungsstroms des Motors ausgestattetes elektronisches Modul (5) gesteuert wird, wobei die Schraube (3) an einem Ende eine Antirotationsachse (80) aufweist, die an ihrem Ende einen Magneten (83) aufweist, und wobei das tragbare Werkzeug einen oder mehrere zur Erkennung der Bewegung des Magneten (83) geeignete Hall-Sensoren (7, 8) aufweist, die derart positioniert sind, dass die Bewegung des Magneten (83) andeutet, dass die Bewegung der Schraube (3) beendet ist, um so die dadurch erzeugte maximale Energie zu begrenzen, **dadurch gekennzeichnet, dass** es die nachfolgenden Schritte aufweist:
- Erfassen eines Versorgungsstromwertes des elektrischen Motors in regelmäßigen Abständen;
- Ermitteln der Ableitung der Stromfunktion in der Zeit; und
- sofern die Ableitung größer als ein erster vorbestimmter Wert (S1) ist, Unterbrechen der Stromversorgung des Motors.

9. Verfahren nach Anspruch 8, **dadurch gekennzeichnet, dass** die Erfassung des Stromwertes in regelmäßigen Abständen und die Ermittlung der Ableitung durch die Ermittlung der Differenz der Stromwerte der neuesten und ältesten Erfassung eines gleitenden Zeitfensters approximiert werden.

10. Verfahren nach einem der Ansprüche 8 oder 9, **dadurch gekennzeichnet, dass** es ferner die Schritte des Vergleichens des Versorgungsstromwertes mit einem zweiten vorbestimmten Wert (2) und, sofern dieser Stromwert größer ist als der zweite vorbestimmte Wert (S2), des Unterbrechens des Versorgungsstroms aufweist.

11. Verfahren nach einem der Ansprüche 8, 9 oder 10, **dadurch gekennzeichnet, dass** die Schritte des Ermittelns der Ableitung und des Vergleichens erst nach Ablauf einer vorbestimmten Zeit nach dem Starten des Motors aktiviert werden.

12. Einsatz eines Stellantriebs nach einem der Ansprüche 1 - 7 in einer Werkstück-Ausziehvorrichtung, insbesondere durch Rollen, oder zur Arbeit an Rohrleitungen, insbesondere zur Erweiterung von Rohrleitungen.

13. Tragbares elektromechanisches Werkzeug zur Arbeit an Rohrleitungen, aufweisend einen tragbaren linearen Stellantrieb (1) nach einem der Ansprüche 1 - 7, sowie erste Fixiermittel (62) und einen zur Ausführung einer ersten Aufgabe geeigneten ersten Werkstückspindelstock (60) sowie mindestens einen zur Ausführung einer zweiten, anderen Aufgabe als die erste geeigneten zweiten Werkstückspindelstock (60), wobei jeder Werkstückspindelstock zweite Fixiermittel (63) aufweist, und das erste und zweite Fixiermittel (62, 63) zum Zusammenwirken zur Befestigung jedes Werkstückspindelstocks (60) des tragbaren linearen Stellantriebs geeignet sind, so dass dieser eine Translationsbewegung eines am tragbaren linearen Stellantrieb (1) befestigten vorbestimmten Teils des Werkstückspindelstocks veranlassen kann.

14. Tragbares Werkzeug nach Anspruch 13, **dadurch gekennzeichnet, dass** die Werkstückspindelstöcke (60) jeweils zur Ausführung mindestens der nachfolgenden Aufgaben geeignet sind:
- radiale Erweiterung einer Rohrleitung,
- axiale Erweiterung einer Rohrleitung,
- Schneiden einer Rohrleitung,
- axiale Online-Crimpen,
- axiales orthogonales Crimpen,
- radiales Crimpen einer Rohrleitung,

15. Tragbares Werkzeug nach Anspruch 14, **dadurch gekennzeichnet, dass** jeder Werkstückspindelstock zur Ausführung nur einer der Aufgaben geeignet ist.

16. Tragbares Werkzeug nach Anspruch 14, **dadurch gekennzeichnet, dass** ein Werkstückspindelstock zum axialen Crimpen einer Rohrleitung in einer zu der durch den tragbaren linearen Stellantrieb (1) erzeugten Translationsbewegung orthogonalen Bewegung geeignet ist.

17. Tragbares Werkzeug nach Anspruch 16, **dadurch gekennzeichnet, dass** der Werkstückspindelstock einen ortsfesten T-Träger (140) aufweist, der am Fuss die zweiten Fixiermittel (63) und in seinem Körper eine zum Durchlassen der Schraube (3) geeignete Bohrung aufweist und eine Bewegungsebene für mobile Mittel (148, 152, 153, 156, 157, 160, 161, 162, 163) definiert, die zur Umwandlung einer von der Schraube (3) erzeugten Translationsbewegung entlang dem Körper des ortsfesten Trägers (140) in Drehbewegungen zweier Backenhalterarme (160, 161) um zwei Achsen (144, 145), die jeweils senkrecht zur Bewegungsebene verlaufen und an den Enden des Kopfs des ortsfesten Trägers (140) geeignet sind, sowie Mittel (164, 165, 166, 167), die die Backen (162, 163) während der Bewegungen der Arme (160, 161) parallel zueinander halten, aufweist.

18. Tragbares Werkzeug nach Anspruch 17, **dadurch gekennzeichnet, dass** die mobilen Mittel symmetrisch zur Bewegungsachse (X-X) der Schraube (3) sind und erste Elemente (141, 148, 149) aufweisen, die entlang dem Körper des ortsfesten Trägers (140) verschiebbar sind und mit der Schraube (3) fest verbunden sind, die wiederum über erste Drehachsen (150, 151) mit zweiten Elementen (152, 153) verbunden sind, die wiederum über zweite Drehachsen (154, 155) mit dritten Elementen (156, 157) verbunden sind, die um Drehachsen (144, 145) des Trägerkopfes drehbar montiert sind, sowie dadurch, dass die Backenhalterarme (160, 161) um dritte Drehachsen (158, 159) der dritten Elemente (156, 157) artikuliert sind, wobei diese Arme (160, 161) Nockenrampen (164, 165) aufweisen, die im Zusammenwirken mit von den zweiten Elementen (152, 153) getragenen Nockenstößeln (166, 167) die Backen (162, 163) während der Bewegung dieser Arme (160, 161) zueinander parallel halten.

19. Tragbares Werkzeug nach einem der Ansprüche 13 - 18, **dadurch gekennzeichnet, dass** die ersten Fixiermittel (62) einen entlang einer senkrecht zur Translationsbewegung der Schraube (3) verlaufenden Achse verschiebbaren Riegel (98) aufweisen, wobei der Riegel zum Einschieben in eine ringförmige Nut (91) der zweiten Fixiermittel (63) geeignet ist, so dass jeder Werkstückspindelstock (60) auf dem tragbaren linearen Stellantrieb (1) befestigt wird und der Werkstückspindelstock (60) dabei um die Schraube (3) frei drehbar ist.

20. Tragbares Werkzeug nach Anspruch 19, **dadurch gekennzeichnet, dass** der Gleitriegel (98) zum Einschieben in die ringförmige Nut (91) einen in exzentrischer Position geladenen Ring aufweist.

## Claims

1. Portable linear actuator including an electrical motor (2) rotating a screw (3) by means of a reducer (4), whereby the motor (2) is controlled by an electronic module (5) having means (12) for acquiring the instantaneous intensity of the supply current of the motor, **characterised in that** the electronic module (5) further includes means (13) for calculating the derivative of the intensity of the supply current over time, connected to means (14) for comparing this derivative with a first predetermined value (S1), whereby the means (14) for comparing are able to control switching means (15) of the supply current if this derivative is greater than the first predetermined value (S1), **in that** the screw (3) includes on one of its end an antirotation axle (80), having at its end a magnet (83), and **in that** the portable tool includes one or more Hall sensors (7, 8) able to detect the passage of the magnet (83), and positioned such that the passage of the magnet (83) indicates that the movement of the screw (3) has ended.

2. Linear portable actuator according to claim 1, **characterised in that** the means (12) for acquiring the intensity include means for sampling at a regular interval, connected to means for storing these samples over a sliding time window having a predetermined duration, and the means (13) for calculating the derivative include means for calculating the difference between the intensity values for the most recent sample and the oldest sample in the window, and the means (14) for comparing compare this difference with the first predetermined value (S1).

3. Linear portable actuator according to claim 1 or 2, **characterised in that** the electronic module (5) further includes second means for comparing the intensity of the supply current with a second predetermined value (S2), able to control the supply current switching means (15) if this intensity is greater than the second predetermined value (S2).

4. Linear portable actuator according to any one of the foregoing claims, **characterised in that** the electronic module (5) further includes means for time delaying, such that the switching means can only be activated after a predetermined period following to the startup of the actuator.

5. Linear portable actuator according to any one of the foregoing claims, **characterised in that** it further includes detectors (7, 8) of end of route for the screw, connected to the electronic module (5), such that the switching means (15) for the power supply are activated when the detectors (7, 8) detect that the screw (3) has stopped.

6. Linear portable actuator according to any one of claims 1 to 5, **characterised in that** the Hall sensors (7, 8) are positioned on an electronic card (82) including several positions for these sensors suited for different routes of movement of the screw (3).

7. Linear portable actuator according to any one of the foregoing claims, **characterised in that** the screw (3) is a ball screw and that the electrical motor (2) is battery-powered.

8. Method for controlling an electrical motor (2) of a linear portable actuator to rotate a screw (3) by means of a reducer (4), whereby the motor (2) is controlled by an electronic module (5) including means (12) for acquiring the instantaneous intensity of the supply current of the motor, whereby the screw (3) includes at one of its ends an antirotation axle (80) including, at its end, a magnet (83), and whereby the portable actuator includes one or more Hall sensors (7, 8) able to detect the passage of the magnet (83) and positioned such that the passage of the magnet (83) indicates that the movement of the screw has ended, to limit the maximum force generated by it, **characterised in that** it includes the following steps: .
- acquisition of a value of supply current to the electrical motor at regular intervals;
- calculation of the derivative of the current function over time; and
- if the derivative is greater than a first predetermined value (S1), interrupting the electrical power supply of the motor.

9. Method according to claim 8, **characterised in that** the acquisition of the current value at regular intervals and the calculation of the derivative are approximated by calculating the difference in current values between the most recent and oldest acquisition of a sliding time window.

10. Method according to any one of claims 8 or 9, **characterised in that** it further includes steps of comparing the supply current value with a second predetermined value (S2), followed by interrupting the supply current if this current value is greater than the second predetermined value (S2).

11. Method according to any one of claims 8, 9, or 10, **characterised in that** the steps of calculating the derivative and comparing are only activated after a predetermined time following to the startup of the motor.

12. Use of an actuator according to any one of claims 1 to 7 in a mechanical part extractor, in particular for rolling, or for pipework, in particular the expansion of pipes.

13. Portable electromechanical tool for pipework including a linear portable actuator (1) according to any one of claims 1 to 7, and first fixation means (62), further including a first workhead (60), suited to carry out on a pipe a first task, and at least one second workhead, suited to carry out on a pipe a second task, different to the first task, whereby each workhead (60) includes second fixation means (63), and the first and second fixation means (62, 63) are suited to work together to affix each workhead (60) of the linear portable actuator such that it can generate a translative movement of a predetermined part of the workhead affixed to the portable linear actuator (1).

14. Portable tool according to claim 13, **characterised in that** the workheads (60) are each suited to carry out at least the following tasks:
- radial expansion of a pipe,
- axial expansion of a pipe,
- cutting a pipe,
- axial online crimping,
- axial orthogonal crimping,
- radial crimping of a pipe.

15. Portable tool according to claim 14, **characterised in that** each head is suited to carry out only one of the tasks.

16. Portable tool according to claim 14, **characterised in that** one workhead is suited to carry out axial crimping of a pipe in a movement orthogonal to the translative movement generated by the portable linear actuator (1).

17. Portable tool according to claim 16, **characterised in that** the workhead includes a fixed T-support (140), including, at its foot, the second fixation means (63), and, in its body, a bore suited to allow the movement of the screw (3) and defining a plane of movement for mobile means (148, 152, 153, 156, 157, 160, 161, 162, 163) suited to transform a translative movement generated by the screw (3) along the body of the fixed support (140) into rotating movements of two jaw-holder arms (160, 161) around two axes (144, 145) perpendicular to the movement plane, positioned at the ends of the head of the fixed support means (140), and means (164, 165, 166, 167) to keep the jaws (162, 163) parallel to one another during the movements of the arms (160, 161).

18. Portable tool according to claim 17, **characterised in that** the mobile means are symmetrical relative to the axis of movement (X-X) of the screw (3), and include first elements (141, 148, 149) that can be moved in translation along the body of the fixed support (140) and are joined with the screw (3), connected, by first rotational axes (150, 151) to second elements (152, 153), which are connected by second rotational axes (154, 155) to third elements (156, 157) mounted pivotably around rotational axes (144, 145) of the support head, and **in that** the jaw-holder arms (160, 161) are articulated around third rotational axes (158, 159) of the third elements (156, 157), whereby these arms (160, 161) include cam ramps (164, 165), which cooperate with cam followers (166, 167) born by the second elements (152, 153) to keep the jaws (162, 163) parallel to one another during the movement of these arms (160, 161).

19. Portable tool according to any one of claims 13 to 18, **characterised in that** the first fixation means (62) include a latch (98) sliding along an axis perpendicular to the translative movement of the screw (3), the latch being suited to be inserted in an annular groove (91) of the second fixation means (63) so as to affix each workhead (60) to the portable linear actuator (1) whilst allowing free rotation of the workhead (60) around the screw (3).

20. Portable tool according to claim 19, **characterised in that** the sliding latch (98) includes a ring loaded in an eccentric position in order to be inserted into the annular groove (91).
